# EUROPEAN PATENT APPLICATION

(11) **EP 3 866 536 A1**
(43) Date of publication of application: **18.08.2021**
(21) Application number: 19879858.9
(22) Date of filing: 28.10.2019
(51) Int. Cl.: H04W 72/04

(54) **RESOURCE CONFIGURATION METHOD AND APPARATUS**

(30) Priority: 01.11.2018 CN 201811296963
(71) Applicant: Huawei Technologies Co., Ltd., Shenzhen, Guangdong 518129 (CN)
(72) Inventor: XIAO, Jiehua, Shenzhen, Guangdong 518129 (CN); TANG, Hao, Shenzhen, Guangdong 518129 (CN); TANG, Zhenfei, Shenzhen, Guangdong 518129 (CN)
(74) Representative: Epping - Hermann - Fischer
(86) International application number: PCT/CN2019/113641
(87) International publication number: WO 2020/088395

(57) **Abstract**

This application provides a resource configuration method and an apparatus. The method includes: A first terminal device determines a sidelink resource of a bandwidth part BWP, and performs sidelink communication with a second terminal device on the BWP based on the sidelink resource. According to the resource configuration method and the apparatus provided in this application, power of a terminal device is saved when sidelink communication is performed, and a more flexible resource configuration and a more flexible signal receiving and sending manner are provided.

## Description

This application claims priority to Chinese Patent Application No. 2018112969635, filed with the Chinese Patent Office on November 1, 2018 and entitled "RESOURCE CONFIGURATION METHOD AND APPARATUS", which is incorporated herein by reference in its entirety.

### TECHNICAL FIELD

This application relates to communications technologies, and in particular, to a resource configuration method and an apparatus.

### BACKGROUND

Sidelink (sidelink, SL) communication is a communication manner in which "things" are directly connected to each other. Different from a conventional case in which communications data between terminal devices needs to pass through a network device, the sidelink communication allows direct transmission of communications data between terminal devices. The sidelink communication may be used in a mobile communications system such as a 5th generation (5th generation, 5G). How to save power of a terminal device and how to implement a flexible signal sending manner when the terminal device performs sidelink communication are technical problems that need to be urgently resolved currently.

### SUMMARY

This application provides a resource configuration method and an apparatus, to resolve problems of how to save power of a terminal device during sidelink communication and how to support a flexible manner of sending a sidelink communication signal.

A first aspect of this application provides a resource configuration method, including:
determining a sidelink resource of a bandwidth part BWP; and
performing sidelink communication on the BWP based on the sidelink resource.

In conclusion, in the resource configuration method provided in the embodiments of this application, a BWP technology is introduced into sidelink communication performed by a terminal device, and the terminal does not need to support receiving or sending data in an entire carrier bandwidth, so that terminal devices having different radio frequency bandwidth capabilities can be supported. This implements a more flexible resource configuration of the terminal device during sidelink communication, and implements energy saving processing of the terminal device when the terminal device performs sidelink communication. Further, in the embodiments, in addition to introducing the BWP technology into the sidelink communication performed by the terminal device, it is further specified that a sidelink resource of a BWP is configured for the terminal, so that the terminal device can perform sidelink communication on the BWP based on the sidelink resource of the BWP.

In a possible implementation, the sidelink resource includes:
a sending resource pool in a mode 1 and a sending resource pool in a mode 2; and/or
a receiving resource pool in the mode 1 and a receiving resource pool in the mode 2.

In a possible implementation, the sidelink resource includes:
a sidelink resource of a first BWP and a sidelink resource of a second BWP, where
the sidelink resource of the first BWP includes a sending resource pool and/or a receiving resource pool that are/is in a mode 1; and
the sidelink resource of the second BWP includes a sending resource pool and/or a receiving resource pool that are/is in a mode 2.

In a possible implementation, the sending resource pool in the mode 1 includes one sending resource pool.

In a possible implementation, the sending resource pool in the mode 2 includes one or more sending resource pools.

In a possible implementation, the receiving resource pool in the mode 1 includes one receiving resource pool.

In a possible implementation, the receiving resource pool in the mode 2 includes one or more receiving resource pools.

In a possible implementation, the determining a sidelink resource of a bandwidth part BWP includes:
receiving a configuration message, where the configuration message is used to indicate the sidelink resource of the bandwidth part BWP.

In a possible implementation, the BWP is a BWP used when a terminal device is in an IC state.

In conclusion, in this embodiment of this application, a plurality of resource allocation modes, BWP parameters corresponding to the plurality of resource allocation modes, and resource pools corresponding to the plurality of resource allocation modes can be configured for the terminal device by using one configuration message sent by a network device to the terminal device. In this way, when a resource allocation mode of the terminal device is switched, the terminal device only needs to switch the resource allocation mode by, for example, sending an indication message. Compared with a conventional technology in which when a resource allocation mode of a terminal device is switched, the network device further needs to send a sidelink communication resource of a corresponding resource mode to the terminal device, the method in this application may support flexible switching of a sidelink resource allocation mode of the terminal device, and reduce signaling load for sending sidelink configuration information between the network device and the terminal device.

In a possible implementation, the sidelink resource includes one or more sending resource pools and one or more receiving resource pools; and
the determining a sidelink resource of a bandwidth part BWP includes:
determining the sidelink resource of the BWP based on a pre-configuration.

In a possible implementation, the BWP is a BWP used when a terminal device is in an OOC state.

In conclusion, according to content of the sidelink resource provided in this embodiment of this application, the sidelink resource and a BWP parameter of the BWP can be added to the configuration information sent by the network device to the terminal device, so that after receiving the configuration information sent by the network device, the terminal device can not only determine the sidelink resource of the BWP from the information, but also obtain the BWP parameter of the BWP. In this way, sidelink communication is performed on the BWP based on the obtained sidelink resource and BWP parameter of the BWP. This resolves a technical problem of configuring a BWP for the terminal device to enable the terminal device to perform sidelink communication on the BWP.

In a possible implementation, when the terminal device switches from the IC state to the OOC state, the performing communication on the BWP based on the sidelink resource includes: when the BWP used when the terminal device is in the IC state is switched to the BWP used when the terminal device is in the OOC state, performing the sidelink communication on the BWP used when the terminal device is in the OOC state.

In conclusion, in the resource configuration method provided in this embodiment of this application, based on introduction of the BWP technology into the sidelink communication of the terminal device, BWP switching of the terminal device can be implemented based on different states of the terminal device, to jointly process the BWP configuration, sidelink resource allocation, and BWP switching of the terminal device. This simplifies a sidelink communication procedure of the terminal device, and improves BWP switching efficiency when the terminal device performs sidelink communication.

A second aspect of this application provides a resource configuration method, including:
sending configuration information to a terminal device, where the configuration information is used to indicate a sidelink resource of a bandwidth part BWP.

In a possible implementation, the sidelink resource is used by the terminal device to perform sidelink communication on the BWP.

In a possible implementation, the sidelink resource includes a sending resource pool in a mode 1 and a sending resource pool in a mode 2; and/or a receiving resource pool in the mode 1 and a receiving resource pool in the mode 2.

In a possible implementation, the sidelink resource includes:
a sidelink resource of a first BWP and a sidelink resource of a second BWP, where
the sidelink resource of the first BWP includes a sending resource pool and/or a receiving resource pool that are/is in a mode 1; and
the sidelink resource of the second BWP includes a sending resource pool and/or a receiving resource pool that are/is in a mode 2.

In a possible implementation, the sending resource pool in the mode 1 includes one sending resource pool.

In a possible implementation, the sending resource pool in the mode 2 includes one or more sending resource pools.

In a possible implementation, the receiving resource pool in the mode 1 includes one receiving resource pool.

In a possible implementation, the receiving resource pool in the mode 2 includes one or more receiving resource pools.

In an embodiment of the second aspect of this application, the BWP is a BWP used when the terminal device is in an IC state.

A third aspect of this application provides a terminal device, including:
a determining module, configured to determine a sidelink resource of a bandwidth part BWP; and
a processing module, configured to perform sidelink communication on the BWP based on the sidelink resource.

In a possible implementation, for specific content included in the sidelink resource, refer to specific descriptions of the sidelink resource in the first aspect. This is not specifically limited herein.

In a possible implementation, the determining module is specifically configured to:
receive a configuration message, where the configuration message is used to indicate the sidelink resource of the bandwidth part BWP.

In a possible implementation, the determining module is specifically configured to:
determine the sidelink resource of the BWP based on a pre-configuration.

In a possible implementation, the processing module is specifically configured to:
when the terminal device switches from the IC state to the OOC state, and the terminal device switches from a BWP used when the terminal device is in the IC state to a BWP used when the terminal device is in the OOC state, perform the sidelink communication on the BWP used when the terminal device is in the OOC state.

A fourth aspect of this application provides a network device, including:
a sending module, configured to send configuration information to a terminal device, where the configuration information is used to indicate a sidelink resource of a bandwidth part BWP, and the sidelink resource is used by the terminal device to perform sidelink communication on the BWP.

In a possible implementation, for specific content included in the sidelink resource, refer to specific descriptions of the sidelink resource in the second aspect. This is not specifically limited herein.

A fifth aspect of this application provides a communications apparatus. The communications apparatus includes a processor, configured to implement functions of the terminal device in the method described in the first aspect. The communications apparatus may further include a memory, configured to store a program instruction and data. The memory is coupled to the processor. The processor may invoke and execute the program instruction stored in the memory, to implement functions of the terminal device in the method described in the first aspect. The communications apparatus may further include a communications interface, and the communications interface is used by the communications apparatus to communicate with another device. For example, the another device is a network device.

In a possible design of the fifth aspect of this application, the communications apparatus includes:
a communications interface, configured for communication between the communications apparatus and another device, where for example, the communications interface is a transceiver;
a memory, configured to store a program instruction; and
a processor, configured to: determine a sidelink resource of a bandwidth part BWP; and perform sidelink communication on the BWP based on the sidelink resource.

In a possible implementation, for specific content included in the sidelink resource, refer to specific descriptions of the sidelink resource in the first aspect. This is not specifically limited herein.

In a possible implementation, the processor is specifically configured to receive a configuration message through the communications interface, where the configuration message is used to indicate the sidelink resource of the bandwidth part BWP.

In a possible implementation, the processor is specifically configured to determine the sidelink resource of the BWP based on a pre-configuration.

In a possible implementation, the processor is specifically configured to: when the terminal device switches from the IC state to the OOC state, and the terminal device switches from a BWP used when the terminal device is in the IC state to a BWP used when the terminal device is in the OOC state, perform the sidelink communication on the BWP used when the terminal device is in the OOC state.

A sixth aspect of this application provides a communications apparatus. The communications apparatus includes a processor, configured to implement functions of the network device in the method described in the second aspect. The communications apparatus may further include a memory, configured to store a program instruction and data. The memory is coupled to the processor. The processor may invoke and execute the program instruction stored in the memory, to implement functions of the network device in the method described in the second aspect. The communications apparatus may further include a communications interface, and the communications interface is used by the communications apparatus to communicate with another device. For example, the another device is a terminal device.

In a possible design of the sixth aspect of this application, the communications apparatus includes:
a communications interface, configured for communication between the communications apparatus and another device, where for example, the communications interface is a transceiver;
a memory, configured to store a program instruction; and
a processor, configured to send configuration information to the terminal device through the communications interface, where the configuration information is used to indicate a sidelink resource of a bandwidth part BWP.

In a possible implementation, the configuration information is used by the terminal device to determine the sidelink resource of the BWP, and perform sidelink communication on the BWP based on the sidelink resource.

In a possible implementation, for specific content included in the sidelink resource, refer to specific descriptions of the sidelink resource in the second aspect. This is not specifically limited herein.

According to a seventh aspect, an embodiment of this application further provides a computer-readable storage medium, including instructions. When the instructions are run on a computer, the computer is enabled to perform the method according to the first aspect of this application.

According to an eighth aspect, an embodiment of this application further provides a computer-readable storage medium, including instructions. When the instructions are run on a computer, the computer is enabled to perform the method according to the second aspect of this application.

According to a ninth aspect, an embodiment of this application provides a chip system. The chip system includes a processor, and may further include a memory, to implement functions of the terminal device in the method of the first aspect. The chip system may include a chip, or may include a chip and another discrete component.

According to a tenth aspect, an embodiment of this application provides a chip system. The chip system includes a processor, and may further include a memory, to implement functions of the network device in the method of the second aspect. The chip system may include a chip, or may include a chip and another discrete component.

According to an eleventh aspect, an embodiment of this application provides a system. The system includes the terminal device in the third aspect or the fifth aspect, and the network device in the fourth aspect or the sixth aspect.

According to a twelfth aspect, an embodiment of this application further provides a computer program product, including instructions. When the instructions are run on a computer, the computer is enabled to perform the method according to the first aspect of this application, or the computer is enabled to perform the method according to the second aspect of this application.

### BRIEF DESCRIPTION OF DRAWINGS

FIG. 1 is a schematic architectural diagram of a communications system to which an embodiment of this application is applied;
FIG. 2 is a schematic diagram of a terminal device in an IC state;
FIG. 3 is a schematic diagram of a terminal device in an OOC state;
FIG. 4 is a schematic flowchart of an embodiment of a resource configuration method according to this application;
FIG. 5 is a schematic flowchart of an embodiment of a resource configuration method according to this application;
FIG. 6 is a schematic flowchart of an embodiment of a resource configuration method according to this application;
FIG. 7 is a schematic structural diagram of an embodiment of a sidelink resource according to this application;
FIG. 8 is a schematic structural diagram of an embodiment of a sidelink resource according to this application;
FIG. 9 is a schematic structural diagram of an embodiment of a sidelink resource according to this application;
FIG. 10 is a schematic structural diagram of an embodiment of a sidelink resource according to this application;
FIG. 11 is a schematic communication flowchart of an embodiment of a communications system using a resource configuration method according to this application;
FIG. 12 is a schematic structural diagram of an embodiment of a resource configuration apparatus according to this application;
FIG. 13 is a schematic structural diagram of an embodiment of a resource configuration apparatus according to this application;
FIG. 14 is a schematic structural diagram of an embodiment of a communications apparatus according to this application; and
FIG. 15 is a schematic structural diagram of an embodiment of a communications apparatus according to this application.

### DESCRIPTION OF EMBODIMENTS

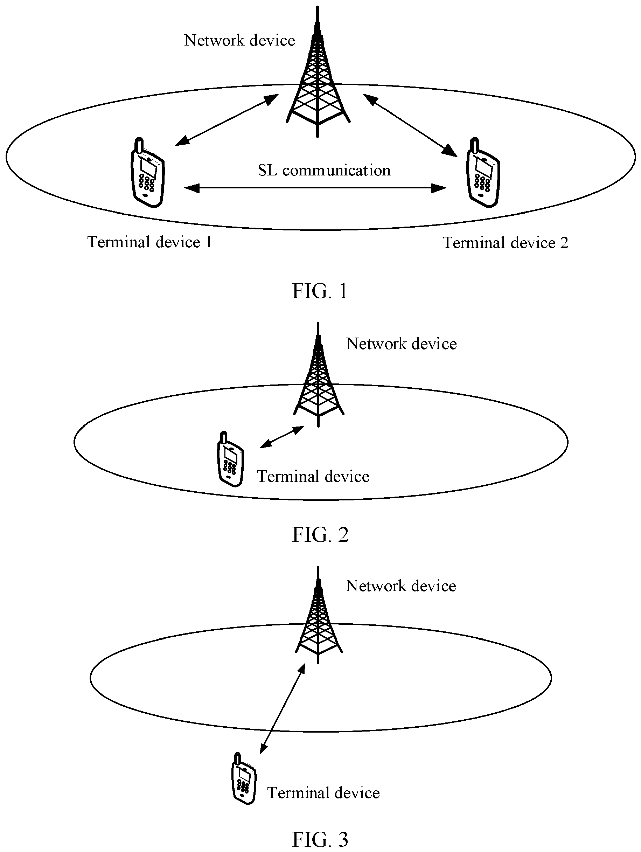

FIG. 1 is a schematic architectural diagram of a communications system to which an embodiment of this application may be applied. As shown in FIG. 1, the communications system includes a network device and at least one terminal device (for example, a terminal device 1 and a terminal device 2 in FIG. 1). The terminal device may be connected to the network device in a wireless or wired manner. FIG. 1 is only a schematic diagram. The communications system may further include another network device, for example, may further include a wireless relay device and a wireless backhaul device, which are not shown in FIG. 1. Quantities of network devices and terminal devices included in the mobile communications system are not specifically limited in the embodiments of this application.

In the embodiments of this application, the network device may be an access device used by the terminal device to access a mobile communications system in a wireless manner, and may be a base station (base station, BS), for example, a NodeB (NodeB) in a third generation (third generation, 3 G) communications system, an evolved NodeB (evolved NodeB, eNodeB) in a long term evolution (long term evolution, LTE) communications system, a base station gNodeB or gNB in a 5G mobile communications system, a base station in a future mobile communications system, or an access node in a wireless-fidelity (wireless-fidelity, WiFi) system. A specific technology and a specific device form used by an access network device are not limited in the embodiments of this application.

In the embodiments of this application, the terminal device may also be referred to as a terminal (terminal). The terminal device may be user equipment (user equipment, UE), a mobile station (mobile station, MS), a mobile terminal device (mobile terminal, MT), or the like. The terminal device may also be a mobile phone (mobile phone), a tablet (Pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical surgery (remote medical surgery), a wireless terminal device in a smart grid (smart grid), a wireless terminal device in transportation safety (transportation safety), a wireless terminal device in a smart city (smart city), a wireless terminal device in a smart home (smart home), or the like.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device and the terminal device are not limited in the embodiments of this application. Communication between the network device and the terminal device and communication between the terminal devices may be performed by using a licensed spectrum (licensed spectrum), or an unlicensed spectrum (unlicensed spectrum), or both a licensed spectrum and an unlicensed spectrum A spectrum resource used between the network device and the terminal device and a spectrum resource used between terminal devices may be, for example, a 4G spectrum or a 5G spectrum. The spectrum resource used between the network device and the terminal device is not limited in the embodiments of this application.

To improve communication efficiency of a communications system and reduce network load, in the communications system shown in FIG. 1, for example, in some communications systems such as the LTE communications system and the 5G communications system, a sidelink (sidelink, SL) communication manner between terminal devices may be provided. The sidelink communication herein may also be referred to as sidelink communication or sidelink communication. The sidelink communication allows direct data transmission (communication) between terminal devices that are authorized (for example, authorized for a public safety operation). For example, in the system shown in FIG. 1, it is assumed that the terminal device 1 may serve as a transmitting end for sidelink communication to send data to the terminal device 2, and the terminal device 2 may serve as a receiving end for sidelink communication to receive data sent by the terminal device 1. However, in the foregoing sidelink communication process, the network device does not directly participate in the process of sending data by the terminal device 1 to the terminal device 2. In other words, data of the terminal device 1 does not pass through the network device, but directly reaches the terminal device 2 from the terminal device 1, thereby implementing end-to-end direct data transmission. It should be noted that, in addition to providing one-to-one communication, the sidelink communication may further provide a one-to-many sidelink communication manner, and each of the one-to-one sidelink communication and the one-to-many sidelink communication may further be classified into communication that includes a relay node and communication that does not include a relay node. In the example in FIG. 1 of this application, only one-to-one communication in the sidelink communication is used as an example for description, and a quantity of terminal devices and whether a relay node is included during sidelink communication are not limited.

Although data transmission between terminal devices in a sidelink communication manner may be performed without direct participation of the network device, in some scenarios, the network device still needs to configure a communication resource used when terminal devices perform sidelink communication to send data and receive data. In this way, the terminal device can perform sidelink communication by using a valid and proper communication resource or in a valid and proper communication manner, to improve sidelink communication efficiency of the terminal device, and prevent a resource used when the terminal device performs sidelink communication from interfering with another terminal device or another communication manner.

However, for terminal devices in different coverage of the network device, based on a state of the terminal, manners used when configuring a sidelink communication resource may include: a sidelink resource configuration manner used when the terminal device is in coverage (in coverage, IC) and a sidelink resource configuration manner used when the terminal device is out of coverage (out of coverage, OOC).

For a terminal device in an IC state, FIG. 2 is a schematic diagram of the terminal device in the IC state. When the terminal device is interested in performing or is configured to perform sidelink communication at a non-serving frequency, the terminal device may measure the non-serving frequency or a frequency of a sidelink configuration provided by the non-serving frequency. If detecting, at a frequency configured for the terminal device to perform sidelink communication, at least one cell meeting an S criterion, the terminal device determines that the terminal device is in coverage of the frequency, that is, in an IC state. If the UE cannot detect, at the frequency, any cell meeting the S criterion, the UE determines that the terminal device is out of coverage (out of coverage) of the frequency, that is, in an OOC state. It should be noted that, for calculation of the S criterion by the terminal device, refer to a related technology in this field, and this is not limited in this embodiment.

Because the terminal device in the IC state is in coverage of a network, in the embodiment shown in FIG. 2, a network device may configure, for the terminal device, a resource used when the terminal device performs sidelink communication. The network device may configure, for the terminal device by using various possible resource allocation modes, the resource used when the terminal device performs sidelink communication.

The network device may configure, for the terminal device in the IC state by using a first possible resource allocation mode, the resource used for sidelink communication. In the first possible resource allocation mode, the network device schedules the resource used when the terminal device performs sidelink communication. In other words, the resource used when the terminal device performs sidelink communication is configured by the network device. For example, the network device may send, to the terminal device by using radio resource control (radio resource control, RRC) signaling, configuration information including a resource that can be used during sidelink communication, and indicate, to the terminal device by using downlink control information (downlink control information, DCI), the resource used during sidelink communication. Optionally, when the terminal device is in an RRC_Connected state, the network device needs to configure, by using RRC signaling, the terminal device to implement the possible resource allocation manner. The terminal device enters the RRC_Connected state after establishing an RRC link, and the terminal device in the RRC_Connected state may communicate with the network device through the RRC link. A main working process of the terminal device includes: monitoring a control channel, providing channel quality measurement and a channel quality feedback, performing neighboring cell measurement and reporting a test report, monitoring a paging channel, and obtaining a system message. The resource used when the terminal device performs sidelink communication herein includes a sending resource and/or a receiving resource. When the terminal device sends data during sidelink communication, the resource is a sending resource. When the terminal device receives data during sidelink communication, the resource is a receiving resource. Optionally, in some standards, a manner of configuring, by the network device, the resource used when the terminal device performs sidelink communication may also be referred to as a mode 1 (Mode 1).

The network device may configure, for the terminal device in the IC state by using a second possible resource allocation manner, the resource used for sidelink communication. In the second possible resource allocation manner, the terminal device autonomously selects and determines the resource used when the terminal device performs sidelink communication. In other words, the resource used when the terminal device performs sidelink communication is autonomously selected and determined by the terminal device. For example, the terminal device may determine, based on sidelink configuration information sent by the network device by using RRC signaling or a system message, the resource used during sidelink communication. Alternatively, the terminal device may determine, based on sidelink resource information pre-configured in the terminal device, the resource used during sidelink communication. Optionally, when the terminal device is in an RRC_Connected state, the network device may configure, by using RRC signaling, the terminal device to implement the second possible resource allocation mode; or when the terminal device is in an RRC_Idle state and in an IC state, or is in the RRC_Idle state and in an OOC state, the second possible resource allocation mode may be used. The RRC_Idle state of the terminal device means that the terminal device does not establish an RRC link, and a main working process of the terminal device in the RRC_IDLE state includes: listening to a paging channel, performing neighboring cell measurement and cell selection or reselection, and obtaining a system message. Similarly, the resource used when the terminal device sidelink performs sidelink communication herein includes a sending resource and a receiving resource. When the terminal device sends data during sidelink communication, the resource is a sending resource. When the terminal device receives data during sidelink communication, the resource is a receiving resource. Optionally, in some standards, a manner of autonomously selecting and determining, by the terminal device, the resource used when the terminal device performs sidelink communication may also be referred to as a mode 2 (Mode 2).

For a terminal device in an OOC state, FIG. 3 is a schematic diagram of the terminal device in the OOC state. The terminal device may also determine, based on an S criterion, whether the terminal device is in coverage of a network device. If the terminal device determines that no cell meeting the S criterion is detected at a frequency configured for the terminal device for performing sidelink communication, the terminal device determines that the terminal device is in the OOC state.

Because the terminal device in the OOC state is out of coverage of a network, in the embodiment shown in FIG. 3, the terminal device may determine, based on pre-configured information of the terminal device, a resource used during sidelink communication. The pre-configured information includes sidelink configuration information of the terminal device. Optionally, the pre-configured information may be provided by a universal integrated circuit card (universal integrated circuit card, UICC) to the terminal device, so that when the terminal device is in the OOC state, the terminal device autonomously determines, based on the pre-configured information, the resource used during sidelink communication. Similarly, the resource used when the terminal device performs sidelink communication herein includes a sending resource and a receiving resource. When the terminal device sends data during sidelink communication, the resource is a sending resource. When the terminal device receives data during sidelink communication, the resource is a receiving resource.

The foregoing provides a plurality of resource allocation manners in which a terminal device determines a resource used during sidelink communication. For the resource used when the terminal device performs sidelink communication, a resource pool (resource pool) is usually used for resource allocation. One resource pool includes one or more time-domain resource units and/or one or more frequency-domain resource units, and the resource pool may also be referred to as a resource group, a resource list, or the like. In the embodiments of this application, a resource pool for sidelink communication may include indication information of a plurality of time-domain subframes and a plurality of frequency-domain sub-channels, and the terminal device can determine, based on the resource pool, the resource used during sidelink communication.

For communication between a terminal device and a network device, a technology of configuring a bandwidth part (BandWidth Part, BWP) is proposed in a 5th generation (5th generation, 5G) mobile communications system, and the technology can support communication of terminal devices having different bandwidth capabilities. In the BWP technology, during communication, the network device may independently configure a bandwidth for the terminal device on a carrier for communication, and the terminal device does not need to perform communication completely based on an entire bandwidth of the carrier. In addition, the BWP technology supports configuring different subcarrier spacings or different cyclic prefix types for a sending signal and a receiving signal, and this saves power of the terminal device and flexibly configures a communication resource and a signal sending manner that are used by the terminal device. A larger subcarrier spacing may support data sending in a shorter time, and a smaller subcarrier spacing has a relatively long data sending time. Configurations of different subcarrier spacings may meet different service data sending requirements.

During sidelink communication, the terminal device usually can use only a data transmission manner such as a fixed subcarrier spacing (subcarrier spacing, SCS), and cannot use, during sidelink communication, a data transmission manner whose bandwidth is less than a sidelink carrier bandwidth. Therefore, in an existing communications system, how to configure a BWP during sidelink communication to enable the terminal device to perform sidelink communication on the BWP is not specified. Consequently, the terminal device cannot use the BWP technology to transmit data during sidelink communication, and therefore, resource selection flexibility of the terminal device during sidelink communication is relatively poor.

The BWP may also be referred to as a bandwidth part, and is a group of consecutive RB resources on a communications carrier of the terminal device. For example, at a first moment, when a traffic volume of the terminal device is relatively large, the terminal device may be configured to perform communication on a large bandwidth BWP 1. At a second moment, when a service of the terminal device is relatively small, the terminal device may be configured to perform communication on a small bandwidth BWP 2, provided that a basic communication requirement is met. Therefore, the terminal device does not need to configure a sidelink communication resource completely based on a bandwidth of each carrier, so that communication of terminal devices having different radio frequency (radio frequency, RF) bandwidth capabilities can be supported, a small receive or transmit bandwidth can be supported to facilitate energy saving of the terminal device, and a subcarrier spacing and a prefix type that can flexibly change and that are of the terminal device can be further supported, to flexibly configure a resource and a signal sending and receiving manner that are used by the terminal device.

Therefore, during sidelink communication, a BWP technology may be used to save the power of the terminal device and implement a flexible signal sending manner. The method provided in the embodiments of this application describes how to perform sidelink communication between terminal devices by using the BWP technology, so as to save the power of the terminal device and implement a more flexible resource configuration and a more flexible signal sending and receiving manner.

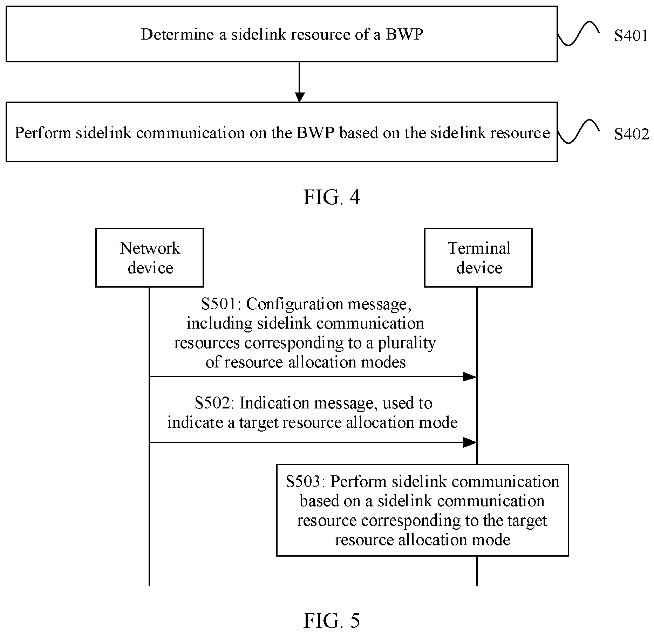

The following uses an example in which the terminal device uses the BWP technology during sidelink communication to describe a resource configuration method used when the terminal device performs sidelink communication in an embodiment of this application with reference to FIG. 4. In the embodiments, a BWP used by the terminal device to perform sidelink communication is referred to as a sidelink BWP. In the embodiments of this application, the sidelinksidelink BWP of the terminal device and a BWP used by the terminal device and the network device to perform downlink or uplink transmission may share a same BWP. Alternatively, in the embodiments of this application, the sidelink BWP of the terminal device is a BWP separately configured by the network device for the terminal device, and is different from a BWP used by the network device and the terminal device to perform downlink or uplink transmission.

FIG. 4 is a schematic flowchart of an embodiment of a resource configuration method according to this application. As shown in FIG. 4, the resource configuration method provided in this embodiment includes the following steps.

S401: Determine sidelinksidelink BWP configuration information, where the sidelinksidelink BWP configuration information includes a sidelink resource and a BWP parameter.

Step S401 may be performed by the terminal device performing sidelink communication shown in FIG. 1, or may be performed by a chip in the terminal device, or may be performed by another apparatus that can support the terminal device in implementing the step, for example, a chip system. In subsequent embodiments of this application, that the terminal device implements the step is used as an example for description, and is not a specific limitation.

In S401, before performing sidelink communication by using a BWP, the terminal device may determine an available sidelink resource of a BWP based on the sidelinksidelink BWP configuration information. The sidelinksidelink BWP configuration information further includes a BWP parameter of a sidelinksidelink BWP used when the terminal device performs sidelink communication, and the BWP parameter is used by the terminal device to determine how to perform sidelink communication by using the BWP.

Optionally, the BWP parameter that is of the sidelinksidelink BWP and that is included in the sidelinksidelink BWP configuration information may include one or more of the following BWP-related parameters: a subcarrier spacing (subcarrier spacing, SCS), a prefix type (for example, a cyclic prefix (cyclic prefix, CP) length), a frequency position and a bandwidth of the BWP, and another parameter in a numerology numerology.

For a terminal in an IC state, the terminal device may receive sidelink configuration information sent by a network device, and determine, based on the sidelink configuration information sent by the network device, a resource used for performing sidelink communication. For a terminal in an OOC state, the terminal device may determine sidelink configuration information from, for example, a UICC in a pre-configuration manner, and determine, based on pre-configured sidelink configuration information, a resource used for performing sidelink communication. The sidelink configuration information includes a sidelink resource that can be used by the terminal device to perform sidelink communication, for example, includes frequency information (a frequency, a bandwidth, and/or a carrier) and/or time-domain information (a subframe).

Therefore, in a first possible determining manner of S401, the BWP-related parameter may be included in the sidelink configuration information sent by the network device to the terminal device, and the sidelink configuration information including the BWP parameter is used as the sidelink BWP configuration information. In this way, after receiving the sidelink configuration information sent by the network device, the terminal device can not only determine, from the information, the sidelink resource that can be used for performing sidelink communication, but also determine the BWP parameter parameter from the information. Therefore, the terminal can determine, based on the sidelink resource and the BWP parameter that are in the sidelink configuration information, a resource used for performing sidelink communication on the BWP. Optionally, the sidelink configuration information may include a resource pool used by the terminal device to perform sidelink. In conclusion, in the first possible determining manner, the BWP parameter of the sidelink BWP is added to the sidelink configuration information. In other words, at least one of, for example, the BWP parameters such as the subcarrier spacing SCS used by the sidelink, a cyclic prefix type, or the frequency position and the bandwidth of the BWP, is introduced into the sidelink configuration information of the terminal device.

In a second possible determining manner of S401, the sidelink configuration information may be included in the sidelink BWP configuration information, so that the terminal device can determine, based on the sidelink BWP configuration information, a resource used for performing sidelink communication on the BWP. The sidelink BWP configuration information may include all or part of information in the sidelink configuration information of the terminal device. For example, the sidelink configuration information includes a resource pool used by the terminal device to perform sidelink. In conclusion, the second possible determining manner is to add the sidelink configuration information to the sidelink BWP configuration information. Therefore, after receiving the sidelink BWP configuration information, the terminal device can not only determine the BWP parameter from the information, but also determine, from the information, a sidelink resource that can be used for performing sidelink communication. Therefore, the terminal can determine, based on the BWP parameter and the sidelink resource that are in the sidelink BWP configuration information, the resource used for performing sidelink communication on the BWP.

Optionally, the sidelink resource determined in S401 may include a sending resource used when the terminal device serves as a transmitting end to perform sidelink communication and/or a receiving resource used when the terminal device serves as a receiving end to perform sidelink communication.

S402: Perform sidelink communication on the BWP based on the sidelink resource.

Specifically, in step S402, the terminal device performs sidelink communication on the BWP based on the sidelink resource that is of the BWP and that is determined in S401. When the terminal device serves as a transmitting end to perform sidelink communication, the terminal device performs sidelink communication on the BWP based on the sending resource determined in S401. When the terminal device serves as a receiving end to perform sidelink communication, the terminal device performs sidelink communication on the BWP based on the receiving resource determined in S401. For a specific communication procedure in which the terminal device performs sidelink communication, refer to a sidelink communication manner of the terminal device in a conventional technology. Details are not described again.

In conclusion, in this embodiment of this application, a sidelink resource of a BWP is determined based on a sidelink BWP configuration, and sidelink communication is performed on the BWP based on the sidelink resource, so that the terminal device implements sidelink communication on the BWP. Therefore, the terminal device in this embodiment can use the BWP technology during sidelink communication, and the terminal does not need to support receiving or sending data in an entire carrier bandwidth, so that terminal devices having different radio frequency bandwidth capabilities can be supported. This implements a more flexible resource configuration of the terminal device during sidelink communication, and implements energy saving processing of the terminal device when the terminal device performs sidelink communication. Further, in this embodiment, the BWP technology is introduced into the sidelink communication performed by the terminal device, and the sidelink BWP configuration information that includes the sidelink resource and the BWP parameter is further specified, so that the terminal device can perform sidelink communication on the BWP after determining the sidelink resource of the BWP based on the sidelink BWP configuration information.

Further, as described in the embodiment shown in FIG. 2, for a terminal device in an IC state, the network device may determine different resource allocation modes used by the terminal device to perform sidelink communication. For example, the sidelink configuration information sent by the network device to the terminal device includes an available sidelink communication resource and a corresponding resource allocation mode, and the terminal device determines the resource allocation mode from the sidelink configuration information, and determines, from the communication resource in the sidelink configuration information based on the determined mode, the resource used for sidelink communication.

However, if the sidelink configuration information sent by the network device to the terminal device includes only one resource allocation mode and a sidelink communication resource corresponding to the resource allocation mode, sidelink communication resources corresponding to different resource allocation modes may be different. Once the network device needs to indicate the terminal device in the IC state to switch a resource allocation mode, new sidelink configuration information needs to be sent. The new sidelink configuration information includes a new resource allocation mode and a sidelink communication resource corresponding to the new resource allocation mode. After receiving the new sidelink configuration information, the terminal device determines, from a communication resource in the new configuration information, the resource used during sidelink communication. Consequently, in the resource allocation mode, if the resource allocation mode of the terminal device is switched, the network device needs to re-configure the resource used by the terminal device to perform sidelink communication. This not only hinders flexible switching of the sidelink resource allocation mode, but also increases signaling load of sending the sidelink configuration information between the network device and the terminal device.

Therefore, an embodiment of this application further provides a resource configuration method, so as to include sidelink communication resources corresponding to a plurality of resource allocation modes in the sidelink configuration information, so that the terminal device can configure the sidelink communication resources corresponding to the plurality of resource allocation modes by using one piece of the received sidelink configuration information. In this way, when the sidelink resource allocation mode is switched, the terminal device does not need to re-obtain the sidelink configuration information to re-configure the sidelink communication resource, and signaling load of sending the sidelink configuration information between the network device and the terminal device is further reduced.

The resource configuration method provided in this embodiment is described below with reference to FIG. 5. As shown in FIG. 5, the resource allocation method provided in this embodiment includes the following steps.

S501: A network device sends a sidelink configuration message to a terminal device, where the sidelink configuration message includes sidelink communication resources corresponding to a plurality of resource allocation modes.

Optionally, in this embodiment, for a terminal device in an IC state, the network device can send a sidelink configuration message to the terminal device in the IC state. The sidelink configuration message includes sidelink communication resources corresponding to a plurality of resource allocation modes of the terminal device. Optionally, in this embodiment, sidelink communication resources corresponding to different resource allocation modes in the plurality of resource allocation modes in the sidelink configuration message may be different or partially the same. For example, the sidelink configuration message includes a corresponding first resource pool when the resource allocation mode of the terminal device is a mode 1, and a corresponding second resource pool when the resource allocation mode of the terminal device is a mode 2. Alternatively, the sidelink configuration message includes resource pools corresponding to more resource allocation modes. This is not specifically limited in this embodiment.

Similarly, in S501, after receiving the sidelink configuration message sent by the network device, the terminal device can determine a plurality of resource allocation modes in the sidelink configuration message and sidelink communication resources respectively corresponding to the plurality of resource allocation modes. To be specific, the network device sends one sidelink configuration message to the terminal device, to implement a configuration of a plurality of resource allocation modes of the terminal device and a configuration of sidelink communication resources respectively corresponding to the plurality of resource allocation modes.

Optionally, the configuration information may be radio resource control (radio resource control, RRC) signaling or a system message.

S502: The network device sends an indication message to the terminal device, and the terminal device receives the indication message. The indication message is used to indicate a target resource allocation mode.

Specifically, because the configuration message sent by the network device to the terminal device in S501 includes sidelink communication resources corresponding to a plurality of resource allocation modes, when the network device needs to determine that the terminal device uses a specific target resource allocation mode in the plurality of resource allocation modes, the network device may send an indication message to the terminal device, to indicate, to the terminal device, that the resource allocation mode of the terminal device is the target resource allocation mode, so that the terminal device performs sidelink communication by using a sidelink communication resource corresponding to the target resource allocation mode.

Optionally, the indication message may be RRC signaling or downlink control information (downlink control information, DCI). The DCI is downlink control information sent by the network device to the terminal device, and is included in a downlink physical channel (physical downlink control channel, PDCCH) for transmission.

Optionally, in this embodiment, S502 may be performed after the configuration message is sent in S501.

Alternatively, optionally, in this embodiment, when the network device first determines the target resource allocation mode of the terminal device in S502, if a resource allocation mode configured by the terminal device is different from the target resource allocation mode, the network device sends an indication message to the terminal device, to indicate the terminal device to switch the resource allocation mode. Then, after receiving the indication message sent by the network device, the terminal device switches the resource allocation mode of the terminal device to the target resource allocation mode based on the indication message. In other words, the indication message in this embodiment may be used to indicate switching of the resource allocation mode. Therefore, a possible implementation of the indication message is that the indication message includes the indicated target resource allocation mode, and in this case, the terminal device may directly switch the resource allocation mode of the terminal device to the target resource allocation mode included in the indication message. For example, the terminal device obtains, by using the sidelink configuration information, the corresponding first resource pool when the resource allocation mode is the mode 1 and the corresponding second resource pool when the resource allocation mode is the mode 2. When receiving the indication message sent by the network device, and the indication message explicitly indicates that the target resource allocation mode is the mode 2, the terminal device determines, based on the indication message, that in this case, the target resource mode is the mode 2, and performs sidelink communication by using the second resource pool corresponding to the mode 2.

Alternatively, in another possible implementation of the indication message, the indication message does not include the indicated target resource allocation mode, but is only used to indicate the terminal device to switch the resource allocation mode. In this case, the terminal device may switch the resource allocation mode of the terminal device to the target resource allocation mode based on the indication message. Optionally, when the terminal device includes a plurality of resource modes, the terminal device may further establish a sequence or a mapping relationship for switching the plurality of resource allocation modes. After receiving the indication message from the network device, the terminal device switches the resource allocation mode of the terminal device based on a preset sequence or mapping relationship. For example, the terminal device obtains, by using the sidelink configuration information, the corresponding first resource pool when the resource allocation mode is the mode 1 and the corresponding second resource pool when the resource allocation mode is the mode 2, and the resource allocation mode configured by the terminal device is the mode 1. In this case, if the indication information sent by the network device is received, and indicates to switch the resource allocation mode, the terminal device switches the resource allocation mode from the configured mode 1 to the mode 2 based on the configured resource allocation mode, and then performs sidelink communication by using the second resource pool corresponding to the mode 2. In this case, switching from the mode 1 to the mode 2 may be implemented by using a specific sequence or mapping relationship. Alternatively, for example, when there are three resource allocation modes marked as A, B, and C, or there are more resource allocation modes, the terminal device may implement sequential switching of the resource allocation modes by using a pre-configured sequence or mapping relationship of A-B-C-A.

S503: The terminal device performs sidelink communication based on the sidelink communication resource corresponding to the target resource allocation mode.

The terminal device determines, in the configuration message received in S501 based on the target resource allocation mode indicated by the indication message received in S502, the sidelink communication resource corresponding to the target resource allocation mode, and performs sidelink communication by using the sidelink communication resource corresponding to the target resource allocation mode.

In conclusion, in the resource configuration method provided in this embodiment, the network device sends a configuration message to the terminal device, and the configuration message can be used to configure sidelink communication resources corresponding to a plurality of resource allocation modes for the terminal device, so that the terminal device can configure the sidelink communication resources corresponding to the plurality of resource allocation modes by using one piece of the received sidelink configuration information. Therefore, when a resource allocation mode of the terminal device is switched, the sidelink configuration information does not need to be re-obtained to re-configure the sidelink communication resource, and the terminal device only needs to switch the resource allocation mode by, for example, sending an indication message. Compared with a conventional technology in which when a resource allocation mode of a terminal device is switched, a network device further needs to send a sidelink communication resource of a corresponding resource mode to the terminal device, the method in this application may support flexible switching of a sidelink resource allocation mode of the terminal device, and reduce signaling load for sending sidelink configuration information between the network device and the terminal device.

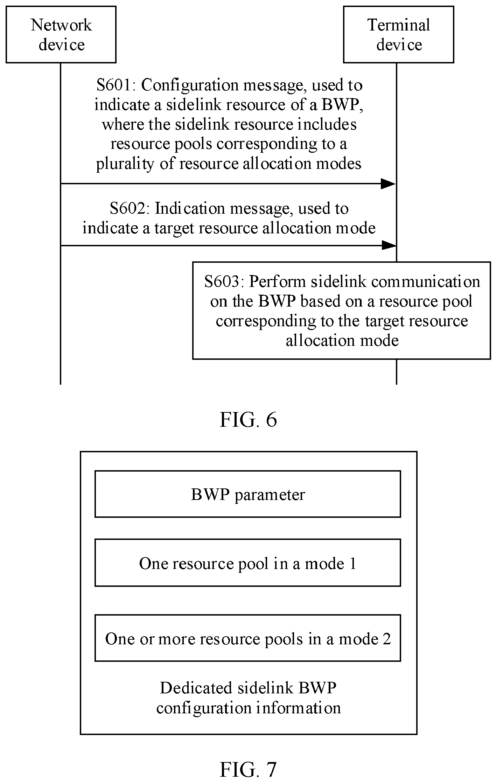

Further, FIG. 6 is a schematic flowchart of an embodiment of a resource configuration method according to this application. In this embodiment shown in FIG. 6, an implementation of combining the method for configuring the plurality of resource allocation modes shown in FIG. 5 and the configuration method using the sidelink BWP shown in FIG. 4 is provided. Specifically, the resource configuration method provided in this embodiment includes the following steps.

S601: A network device sends a configuration message to a terminal device, where the configuration message includes a sidelink resource of a BWP, and the sidelink resource include resource pools corresponding to a plurality of resource allocation modes.

A specific implementation of the step is the same as that of S501, and a difference from S501 lies in that the configuration message sent by the network device to the terminal device in S601 in this embodiment includes the sidelink resource of the BWP. Optionally, the sidelink resource of the BWP in S601 may be the sidelink resource of the BWP described in the embodiment in FIG. 4. It should be noted that all BWPs in the embodiments shown in FIG. 6 to FIG. 9 may be BWPs used when the terminal device is in an IC state. In addition, the configuration message provided in this embodiment may be the sidelink BWP configuration information that includes the sidelink resource and the BWP parameter of the BWP and that is provided in the embodiment shown in FIG. 4.

Further, for a terminal device in an IC state and in an RRC_Connected state in this embodiment, the configuration message in this embodiment may be dedicated (dedicated) RRC signaling sent by the network device to each terminal device. The configuration message used by the network device to configure a BWP for the terminal device that is in the IC state and in the RRC_Connected state may be referred to as dedicated sidelink BWP configuration information in this embodiment. The following describes a structure of the dedicated sidelink BWP configuration information with reference to the sidelink resource in this embodiment of this application.

A first possible implementation of the sidelink resource of the BWP according to the embodiments of this application is as follows: The sidelink resource includes a sending resource pool in a mode 1 and a sending resource pool in a mode 2; and/or a receiving resource pool in the mode 1 and a receiving resource pool in the mode 2. The sending resource pool in the mode 1 includes one sending resource pool, and the sending resource pool in the mode 2 includes one or more sending resource pools. The receiving resource pool in the mode 1 includes one receiving resource pool, and the receiving resource pool in the mode 2 includes one or more receiving resource pools.

Based on the implementation of the sidelink resource of the BWP, FIG. 7 is a possible schematic structural diagram of dedicated sidelink BWP configuration information using the foregoing sidelink resource. A plurality of resource allocation modes in the dedicated sidelink BWP configuration information share one BWP configuration, that is, the sidelink resource includes a BWP parameter of only one BWP. Specifically, in FIG. 7, that the plurality of resource allocation modes are the mode 1 and the mode 2 is used as an example. A resource pool in the figure may include a sending resource pool or a receiving resource pool. In this case, the sidelink resource in FIG. 7 may include receiving resource pools or sending resource pools in the two modes. To be specific, the network device may send, to a terminal device serving as a transmitting end during sidelink communication, a sidelink resource that includes sending resource pools in a plurality of modes, and send, to a terminal device serving as a receiving end during sidelink communication, a sidelink resource that includes receiving resource pools in a plurality of modes. In the dedicated sidelink BWP configuration information, one resource pool in the mode 1 corresponds to a BWP parameter in the dedicated sidelink BWP configuration information, and one or more resource pools in the mode 2 also correspond to a BWP parameter in the dedicated sidelink BWP configuration information. It should be noted that, in FIG. 7, one or more resource pools in the mode 2 may include one resource pool in the mode 1, or one or more resource pools in the mode 2 are different from one resource pool in the mode 1. Therefore, the structure of the dedicated sidelink BWP configuration information shown in FIG. 7 can implement that one sidelink resource includes resource pools in a plurality of modes, and the dedicated sidelink BWP configuration information further includes a BWP parameter, so that after the terminal device receives the sidelink resource that is in the configuration message, the terminal device can determine resource pools used in a plurality of resource allocation modes and a BWP parameter that can be used during sidelink communication in each resource allocation mode. After determining a target resource allocation mode, the terminal device performs sidelink communication on a BWP based on a resource pool corresponding to the resource allocation mode.

Optionally, an example in which the terminal device includes two resource allocation manners, the mode 1 and the mode 2, is also used for description. In this embodiment, a second possible implementation of the sidelink resource of the BWP is as follows: The sidelink resource includes a sidelink resource of a first BWP and a sidelink resource of a second BWP. The sidelink resource of the first BWP includes a sending resource pool and/or a receiving resource pool in the mode 1. The sidelink resource pool of the second BWP includes a sending resource pool and/or a receiving resource pool in the mode 2. In addition, the sending resource pool in the mode 1 includes one sending resource pool, and the sending resource pool in the mode 2 includes one or more sending resource pools. The receiving resource pool in the mode 1 includes one receiving resource pool, and the receiving resource pool in the mode 2 includes one or more receiving resource pools.

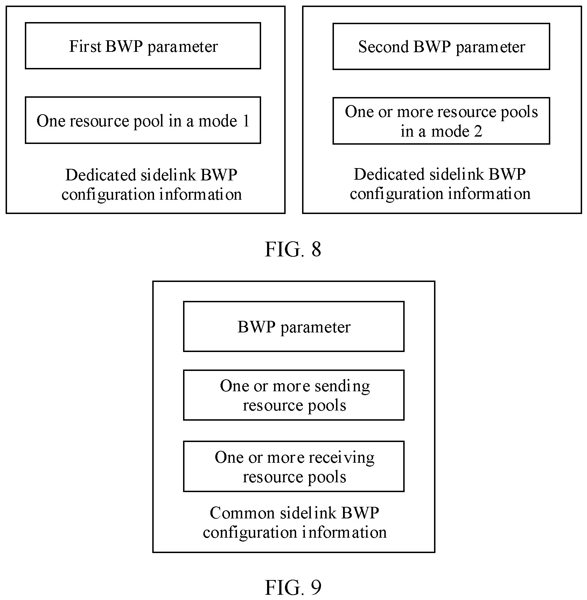

Based on the implementation of the sidelink resource of the BWP, for example, FIG. 8 is a possible schematic structural diagram of dedicated sidelink BWP configuration information using the foregoing sidelink resource. Each piece of dedicated sidelink BWP configuration information corresponds to one resource allocation mode, and each piece of dedicated sidelink BWP configuration information includes a sidelink resource of a BWP and a BWP parameter of the BWP. In other words, in FIG. 8, two pieces of different dedicated sidelink BWP configuration information are used to separately configure two different resource allocation modes. In FIG. 8, that a plurality of resource allocation modes are the mode 1 and the mode 2 is also used as an example. A resource pool in the figure may include a sending resource pool or a receiving resource pool. Dedicated sidelink BWP configuration information of a first BWP includes a resource pool in the mode 1 and a BWP parameter of the corresponding first BWP. Dedicated sidelink BWP configuration information of a second BWP includes one or more resource pools in the mode 2 and a BWP parameter of the corresponding second BWP. It should also be noted that, in FIG. 8, one or more resource pools in the mode 2 may include one resource pool in the mode 1, or one or more resource pools in the mode 2 are different from one resource pool in the mode 1. Therefore, in the structure of the dedicated sidelink BWP configuration information shown in FIG. 8, a plurality of pieces of dedicated sidelink BWP configuration information can include resource pools in a plurality of different modes, each piece of dedicated sidelink BWP configuration information further includes a BWP parameter, and BWP parameters in the plurality of pieces of dedicated sidelink BWP configuration information may be the same or may be different, so that after receiving the plurality of pieces of dedicated sidelink BWP configuration information, the terminal device can determine resource pools used in a plurality of resource allocation modes and a BWP parameter that can be used during sidelink communication in each resource allocation mode, so as to perform sidelink communication on a BWP based on a corresponding resource pool.

It should be noted that, in the embodiments shown in FIG. 7 and FIG. 8, the example in which the terminal device includes two resource allocation manners, the mode 1 and the mode 2, is used for description. The dedicated sidelink BWP configuration information may further include more resource allocation modes. Specific representation forms of the resource allocation modes are the same, and are merely simple superposition of quantities, and a quantity of resource configuration modes in the dedicated sidelink BWP configuration information is not specifically limited in this application.

S602: The network device sends an indication message to the terminal device, and the terminal device receives the indication message. The indication message is used to indicate a target resource allocation mode.

Optionally, a specific implementation of step S602 is the same as that of S502, and same details are not described again. A difference lies in that in this embodiment, the network device needs to indicate, by using the indication message, that the resource allocation mode of the terminal device is the target resource allocation mode, so that the terminal device switches to a corresponding BWP based on the target resource allocation mode. For example, in the embodiment shown in FIG. 8, after receiving the indication message, the terminal device determines that the resource allocation mode of the terminal device is switched from the mode 1 to the mode 2, and then performs a subsequent sidelink communication-related operation based on the dedicated sidelink BWP configuration information of the second BWP corresponding to the mode 2.

S603: Perform sidelink communication on the BWP based on the resource pool corresponding to the target resource allocation mode.

The terminal device determines, in the configuration message received in S601 based on the target resource allocation mode indicated by the indication message received in S602, the resource pool corresponding to the target resource allocation mode, and performs sidelink communication on the BWP by using the resource pool corresponding to the target resource allocation mode.

In conclusion, in the resource configuration method provided in this embodiment, a plurality of resource allocation modes, BWP parameters corresponding to the plurality of resource allocation modes, and resource pools corresponding to the plurality of resource allocation modes can be configured for the terminal device by using one configuration message sent by the network device to the terminal device. In this way, when a resource allocation mode of the terminal device is switched, the terminal device only needs to switch the resource allocation mode by, for example, sending an indication message. Compared with a conventional technology in which when a resource allocation mode of a terminal device is switched, the network device further needs to send a sidelink communication resource of a corresponding resource mode to the terminal device, the method in this application may support flexible switching of a sidelink resource allocation mode of the terminal device, and reduce signaling load for sending sidelink configuration information between the network device and the terminal device.

Further, the embodiment shown in FIG. 6 shows that for a terminal device in an IC state and in an RRC_Connected state, the configuration information may be sent to the terminal device by using dedicated RRC signaling. However, in the foregoing embodiment, for a terminal device in an IC state and in an RRC_Idle state, the network device may send the configuration information, which may also be referred to as a system broadcast, to the terminal device by using a system message. In the system message, a sidelink communication resource of the terminal device may also be configured by using a specific structure setting of the sidelink BWP configuration information. The configuration message used by the network device to configure a BWP for the terminal device that is in the IC state and in the RRC_Idle state may be referred to as common (common) sidelink BWP configuration information in this embodiment.

Specifically, FIG. 9 is a schematic structural diagram of a possible implementation including the foregoing common sidelink BWP configuration information. As shown in FIG. 9, the common sidelink BWP configuration information includes one or more sending resource pools and one or more receiving resource pools. To be specific, the common sidelink BWP configuration information includes a BWP parameter of only one BWP, and the common sidelink BWP configuration information may include both one or more sending resource pools and one or more receiving resource pools.

Further, the embodiments shown in FIG. 6 to FIG. 9 are all for a terminal device in an IC state. However, in the embodiment shown in FIG. 4, when the terminal device is in an OOC state, the sidelink communication resource of the terminal device may also be pre-configured by using a specific structure setting of the sidelink BWP configuration information. In this embodiment, the sidelink BWP configuration information used to pre-configure the terminal device may be referred to as pre-configured (pre-configured) sidelink BWP configuration information.

Specifically, when the embodiment shown in FIG. 4 is applied to a terminal device in an OOC state, S401 specifically includes: determining a sidelink resource of a BWP based on a pre-configuration. Optionally, the determining a sidelink resource of a BWP may be performed by a UICC, and the terminal device determines a pre-configuration of a sidelink communication resource by using the UICC. It should also be noted that the BWP in this embodiment is a BWP used when the terminal device is in an OOC state.

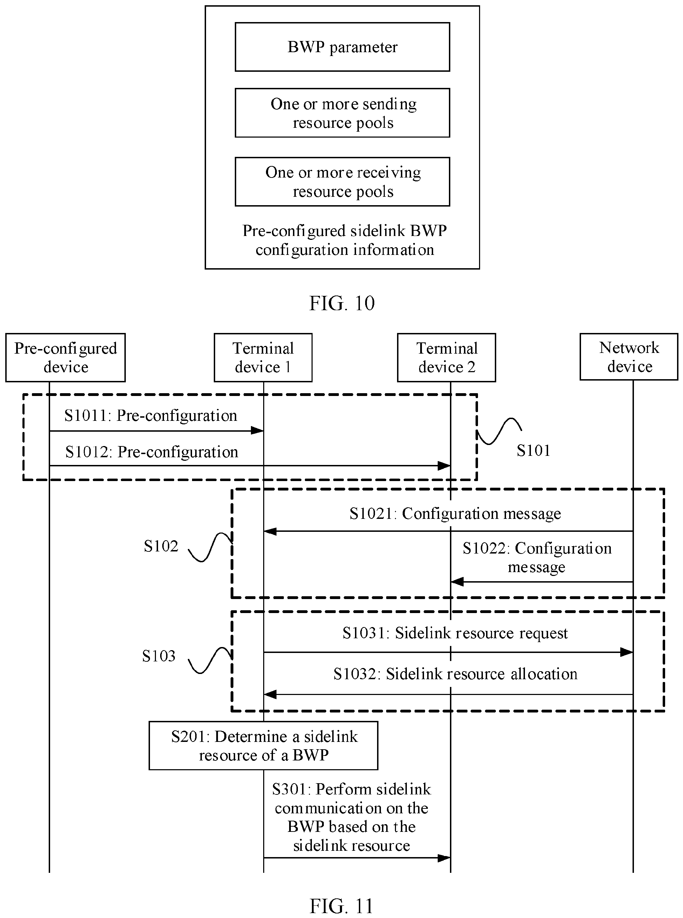

Optionally, FIG. 10 is a schematic structural diagram of a possible implementation of pre-configured sidelink BWP configuration information including the foregoing sidelink resource. As shown in FIG. 10, the pre-configured sidelink BWP configuration information includes one or more sending resource pools and one or more receiving resource pools. To be specific, the pre-configured sidelink BWP configuration information used for the pre-configuration of the terminal device includes a BWP parameter of only one BWP, and the pre-configured sidelink BWP configuration information may include both one or more sending resource pools and one or more receiving resource pools.

Optionally, when a state of a terminal device is switched from an OOC state to an IC state, sidelink BWP configuration information used by the terminal device to perform sidelink communication is also switched from the pre-configured sidelink BWP configuration information shown in FIG. 10 to the dedicated sidelink BWP configuration information shown in FIG. 7, FIG. 8, or FIG. 9. Such switching may be completed by the terminal device by receiving configuration information of RRC. When a state of a terminal device is switched from an IC state to an OOC state, sidelink BWP configuration information used by the terminal device to perform sidelink communication should be switched from the dedicated sidelink BWP configuration information shown in FIG. 7, FIG. 8, or FIG. 9 to the pre-configured sidelink BWP configuration information shown in FIG. 10. Such switching of the sidelink BWP is autonomously completed by the terminal device, and does not need to be indicated by the network device. Load of a network information notification is reduced.

Optionally, time domain resources in the sending resource pool and/or the receiving resource pool in the foregoing embodiments of this application may include a symbol, a slot, a subframe, and a time-domain resource formed by a plurality of aggregated time units.

In conclusion, in this application, the structure setting of the sidelink BWP configuration information in the embodiments shown in FIG. 7 to FIG. 10 implements configuration of sidelink communication resources for the terminal device in different states. The sidelink BWP configuration information may be classified into the following types based on different states of the terminal device.
1. The common sidelink BWP configuration information is configured by using a system message, and is used by the network device to perform a sidelink BWP configuration on all terminal devices that are in an IC state and in an RRC_Idle state in a cell by using the system message.
2. The dedicated sidelink BWP configuration information is configured by using RRC signaling, and is used by the network device to perform a sidelink BWP configuration on a specific terminal device in an IC state and in an RRC_Connected state by using dedicated RRC signaling.
3. The pre-configured (pre-configured) sidelink BWP configuration information is implemented by using a pre-configuration, and is used to perform a sidelink BWP configuration on a terminal device that is in an OOC state.

Further, in this embodiment, a BWP technology is introduced into sidelink communication of the terminal device, so that a resource used when the terminal device performs sidelink communication can be additionally displayed within a frequency range by using a BWP parameter. However, the BWP further needs to be switched to change a related BWP parameter when the BWP is in different states of the terminal device or has different service requirements. Therefore, this application further provides a resource configuration method that supports sidelink communication performed by a terminal device during BWP switching.

Specifically, in the resource configuration method provided in this embodiment, when the terminal device switches from the IC state to the OOC state, S402 specifically includes: when a BWP used when the terminal device is in the IC state is switched to a BWP used when the terminal device is in the OOC state, performing the sidelink communication on the BWP used when the terminal device is in the OOC state. Before S402, the terminal device has obtained both the BWP used when the terminal device is in the IC state and the BWP used when the terminal device is in the OOC state, so as to perform corresponding BWP switching when the state of the terminal changes.

For example, if the BWP switching method provided in this embodiment is applied to the embodiments in FIG. 5 to FIG. 10, the sidelink resources in FIG. 7 and FIG. 10 in the foregoing embodiments may be used as an example. The BWP used when the terminal device is in the OOC state is the BWP pre-configured in the pre-configured sidelink BWP configuration information in FIG. 10. After the terminal device switches from the OOC state to the IC state, the sidelink BWP configuration information needs to be switched to implement BWP switching. To be specific, the BWP used when the terminal device is in the IC state is switched to the BWP configured in the dedicated sidelink BWP configuration information in FIG. 7.

Optionally, based on the foregoing embodiment, because BWP switching is performed when a state of the terminal device changes, to avoid frequent BWP switching caused by frequent changes of the state of the terminal device between the IC state and the OOC state, in a specific implementation of this embodiment, a preset time range T may be further set. When the state of the terminal device changes, for example, switches from the IC state to the OOC state, the sidelink BWP configuration information is switched only when the state of the terminal device does not change again within the preset time range T. However, if the state of the terminal device changes again within the preset time range T, the terminal device does not switch the sidelink BWP configuration information. For example, the preset time range is 10 ms. After the terminal device switches from the IC state to the OOC state, if the terminal device does not switch from the OOC state to another state (for example, the IC state) again within 10 ms, after the preset time of 10 ms ends, the sidelink BWP configuration information is switched from the dedicated sidelink BWP to the pre-configured sidelink BWP, or from the common sidelink BWP to the pre-configured sidelink BWP, to implement BWP switching.

Therefore, in the resource configuration method provided in this embodiment, based on introduction of the BWP technology into the sidelink communication of the terminal device, BWP switching of the terminal device can be implemented based on different states of the terminal device, to jointly process the BWP configuration, sidelink resource allocation, and BWP switching of the terminal device. This simplifies a sidelink communication procedure of the terminal device, and improves BWP switching efficiency when the terminal device performs sidelink communication.

FIG. 11 is a schematic communication flowchart of an embodiment of a communications system using a resource configuration method according to this application. In the embodiment in FIG. 11, a specific implementation in which the resource configuration method in the foregoing embodiments is applied to the communications system to enable a terminal device to implement sidelink communication is provided. A pre-configured device may include a UICC, and a device for performing a pre-configuration operation is not specifically limited in this embodiment.

Specifically, a first sidelink resource configuration method in FIG. 11 is shown in S101. For a terminal device in an OOC state, a pre-configured sidelink resource is used for implementation. The pre-configured sidelink resource may be configured by using the pre-configured sidelink BWP configuration information shown in FIG. 10. In S101, the pre-configured device separately sends a pre-configured message to a terminal device 1 and a terminal device 2 in S1011 and S1012. The pre-configured message in this embodiment may include the pre-configured sidelink BWP configuration information shown in FIG. 10. In this case, the terminal device 1 and the terminal device 2 that are in the OOC state do not perform S102 and S103, but determine, in S201, a sidelink resource of a BWP based on the pre-configured sidelink BWP configuration information that is sent by the pre-configured device and that is obtained in S1011 and S1012. Then, the terminal device 1 and the terminal device 2 perform, in S301, sidelink communication on the BWP based on the sidelink resource determined in S201.

A second sidelink resource configuration method in FIG. 11 is shown in S102. For a terminal device in an IC state and in an RRC_Idle state, the terminal device 1 and the terminal device 2 may use a resource allocation mode in a mode 2. When the terminal device uses the resource allocation manner, the terminal device 1 autonomously selects and determines, by using the configuration information sent by a network device, the sidelink resource used for performing sidelink communication on the BWP. The configuration information may be a system message, namely, common sidelink BWP configuration information, sent by the network device to the terminal device shown in FIG. 9. In S102, the network device separately sends the sidelink BWP configuration information to the terminal device by using a system message broadcast in S1021 and S1022. The sidelink BWP configuration information may be the common sidelink BWP configuration information shown in FIG. 9. The terminal device 1 is a sending terminal, and the terminal device 2 is a receiving terminal. After the network device sends the sidelink BWP configuration information to the terminal device 1 and the terminal device 2 in S102, the terminal device 1 and the terminal device 2 may not perform S103. The terminal device 1 and the terminal device 2 may determine the sidelink resource of the BWP from the common sidelink BWP configuration information in S201, and then the terminal device 1 performs, in S301, sidelink communication on the BWP based on the sidelink resource determined in S201, and sends sidelink communication data to the terminal device 2.

A third sidelink resource configuration method in FIG. 11 is S102 in combination with S103. For a terminal device in an IC state and in an RRC_Connected state, to use a better radio resource and avoid a resource conflict, the terminal device 1 may use a resource allocation mode of a mode 1. When the terminal device uses the resource allocation manner, the terminal device 1 performs sidelink communication on the BWP by using the sidelink resource indicated by the network device. In this case, the configuration information used to determine the sidelink resource of the BWP may be dedicated RRC signaling, namely, dedicated sidelink BWP configuration information, sent by the network device to the terminal device shown in FIG. 7 or FIG. 8. However, in S102, the network device separately sends the common sidelink BWP configuration information to the terminal device 1 and the terminal device 2 in S1021 and S1022. When the terminal device 1 uses the resource allocation manner of the mode 1, the terminal device 1 sends a sidelink resource request to the network device, to indicate that the terminal device 1 has sidelink data to be sent. Then, the network device allocates a sidelink resource to the terminal device 1, and sends an indication message to the terminal device 1 to indicate related information about sidelink resource scheduling, so that the terminal device 1 can determine the sidelink resource of the BWP from the dedicated sidelink BWP configuration information based on a configuration of the network device, then perform sidelink communication on the BWP by using the determined sidelink resource of the BWP, and send sidelink communication data to the terminal device 2.

In this case, when the terminal device 1 serving as a transmitting end determines the sidelink resource of the BWP by using the dedicated sidelink BWP configuration information, the terminal device 2 serving as a receiving end may determine the sidelink resource of the BWP by using the common sidelink BWP configuration information in the foregoing second resource configuration method, or may determine the sidelink resource of the BWP by using dedicated sidelink BWP configuration information of the terminal device 2. Specifically, the terminal device 2 may receive sidelink control information (sidelink control information, SCI) information indicated by the terminal device 1, or determine, by using the common sidelink BWP configuration information in the system message sent by the network device, the sidelink resource that is of the BWP and that is used to receive the sidelink communication data sent by the terminal device 2. Alternatively, the network device may further send the dedicated sidelink BWP configuration information to the terminal device 2. In this case, the terminal device 2 may send a sidelink resource request to the network device, and after allocating a sidelink resource to the terminal device 2, the network device sends an indication message to the terminal device 2 to indicate related information about sidelink resource scheduling. In this way, the terminal device 2 can determine the sidelink resource of the BWP from the dedicated sidelink BWP configuration information based on a configuration of the network device, then perform sidelink communication on the BWP by using the determined sidelink resource of the BWP, and receive the sidelink communication data sent by the terminal device 1.

Optionally, in a possible implementation of S103, the terminal device 1 sends scheduling request information to the network device in S1031, to indicate that the terminal device 1 has sidelink communication data to be sent, and the terminal device 1 may further send sidelink buffer status report (buffer status report, BSR) information to a base station, to indicate a data volume of the sidelink communication data to be sent. Then, the network device sends DCI information to the terminal device 1 through a Uu (a terminal device (user equipment, UE) and an evolved universal terrestrial radio access network (evolved universal terrestrial radio access network, UTRAN)) interface in S1032, where the DCI information is used to indicate related information about the sidelink resource scheduling of the terminal device 1. The Uu interface may be a communications interface between a network device and a terminal device in some communications systems such as LTE. Uplink communication or downlink communication may be performed on the Uu interface. The uplink communication includes data transmission from the terminal device to the network device, and the downlink communication includes data transmission from the network device to the terminal device. Optionally, before sending the DCI information, the network device further determines, based on the request information of the terminal device 1, a physical sidelink control channel (physical sidelink control channel, PSCCH) resource and a physical sidelink shared channel (physical sidelink shared channel, PSSCH) resource that are used when the terminal device 1 performs sidelink communication. The DCI information sent by the network device to the terminal device is used to schedule a PSCCH, and may further include sidelink control information (sidelink control information, SCI) information used to schedule the PSSCH. The control information is used to indicate sidelink control information (frequency resources and time intervals for initial transmission and retransmission) of the PSSCH. Subsequently, in S301, the terminal device 1 generates SCI information and sidelink communication data, and sends the SCI information and the sidelink communication data on the BWP. The SCI information is sent by using a PSCCH channel, and the sidelink communication data is sent by using the PSSCH channel. The terminal device 2 listens to and receives the SCI information sent by the terminal device 1 on the BWP, and obtains the sidelink communication data based on the SCI information.

In the embodiments of this application, one resource pool in sidelink communication includes one or more pieces of time-domain indication information and one or more pieces of frequency-domain indication information. The time domain may be a combination of one or more time domain units in a symbol, a slot, or a subframe, and the frequency-domain information may be a combination of one or more frequency domain units in a sub-channel (sub-channel), a subcarrier, or a resource block (RB). The resource pool information in this embodiment of this application may be used to determine resources used by the PSCCH and the PSSCH. Information carried by the PSCCH is indicated by using sidelink allocation (sidelink allocation, SA), and information carried by the PSSCH is indicated by using data. An SA resource and a data resource that are in a resource pool are in one-to-one correspondence in a specific mode. In sidelink communication, one transmission data block may be transmitted for a plurality of times, including initial transmission and/or retransmission. A resource for a plurality of times of transmission may be considered during a resource indication.

In the foregoing embodiments provided in this application, the method provided in the embodiments of this application is separately described from perspectives of the network device, the terminal device, and interaction between the network device and the terminal device. To implement functions in the foregoing method provided in the embodiments of this application, the network device and the terminal device may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions.

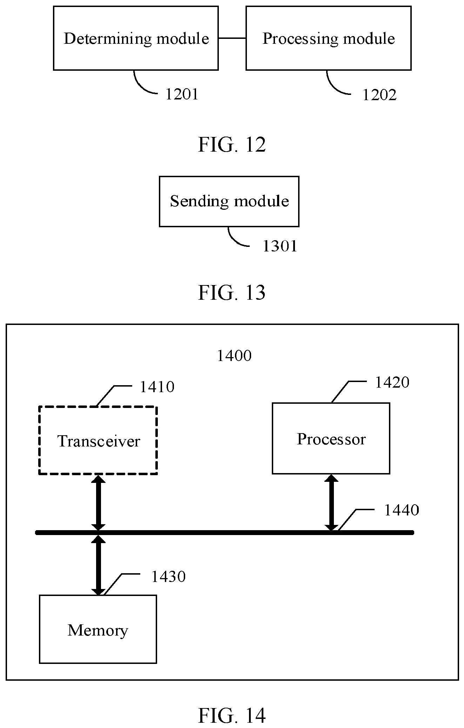

FIG. 12 is a schematic structural diagram of an embodiment of a resource configuration apparatus according to this application. The resource configuration apparatus shown in FIG. 12 may be used as any terminal device in the foregoing embodiments, or may implement functions of any terminal device in the foregoing embodiments.

Specifically, the resource configuration apparatus provided in this embodiment includes a determining module 1201 and a processing module 1202. The determining module 1201 is configured to determine a sidelink resource of a bandwidth part BWP. The processing module 1202 is configured to perform sidelink communication on the BWP based on the sidelink resource.

The resource configuration apparatus provided in this embodiment may be configured to perform the resource configuration method shown in FIG. 4. An implementation and a principle of the resource configuration apparatus are the same as those of the resource configuration method, and details are not described herein again.

Optionally, in the foregoing embodiment, the sidelink resource includes a sending resource pool in a mode 1 and a sending resource pool in a mode 2; and/or a receiving resource pool in the mode 1 and a receiving resource pool in the mode 2.

Optionally, in the foregoing embodiment, the sidelink resource includes a sidelink resource of a first BWP and a sidelink resource of a second BWP.

The sidelink resource of the first BWP includes a sending resource pool and/or a receiving resource pool that are/is in a mode 1.

The sidelink resource of the second BWP includes a sending resource pool and/or a receiving resource pool that are/is in a mode 2.

Optionally, in the foregoing embodiment, the sending resource pool in the mode 1 includes one sending resource pool.

The sending resource pool in the mode 2 includes one or more sending resource pools.

Optionally, in the foregoing embodiment, the receiving resource pool in the mode 1 includes one receiving resource pool.

The receiving resource pool in the mode 2 includes one or more receiving resource pools.

Optionally, in the foregoing embodiment, the determining a sidelink resource of a bandwidth part BWP includes:
receiving a configuration message, where the configuration message is used to indicate the sidelink resource of the bandwidth part BWP.

Optionally, in the foregoing embodiment, the BWP is a BWP used when the terminal device is in an IC state.

The resource configuration apparatus provided in the foregoing embodiments may be configured to perform the resource configuration method. An implementation and a principle of the resource configuration apparatus are the same as those of the resource configuration method, and details are not described herein again.

Optionally, in the foregoing embodiment, the sidelink resource includes one or more sending resource pools and one or more receiving resource pools. The determining a sidelink resource of a bandwidth part BWP includes: determining the sidelink resource of the BWP based on a pre-configuration.

Optionally, in the foregoing embodiment, the BWP is a BWP used when the terminal device is in an OOC state.

Optionally, in the foregoing embodiment, when the terminal device switches from the IC state to the OOC state, the performing communication on the BWP based on the sidelink resource includes: when the BWP used when the terminal device is in the IC state is switched to the BWP used when the terminal device is in the OOC state, performing the sidelink communication on the BWP when the terminal device is in the OOC state.

The resource configuration apparatus provided in the foregoing embodiments may be configured to perform the resource configuration method. An implementation and a principle of the resource configuration apparatus are the same as those of the resource configuration method, and details are not described herein again.

FIG. 13 is a schematic structural diagram of an embodiment of a resource configuration apparatus according to this application. The resource configuration apparatus shown in FIG. 13 may be used as any network device in the foregoing embodiments, or may implement functions of any network device in the foregoing embodiments.

Specifically, the resource configuration apparatus provided in this embodiment includes: a sending module 1301, configured to: send configuration information to a terminal device, where the configuration information is used to indicate a sidelink resource of a bandwidth part BWP, and the configuration information is used by the terminal device to determine the sidelink resource of the BWP, and perform sidelink communication on the BWP based on the sidelink resource. The resource configuration apparatus may further include a determining module, configured to generate the configuration information.

Optionally, in the foregoing embodiment, the sidelink resource includes a sending resource pool in a mode 1 and a sending resource pool in a mode 2; and/or a receiving resource pool in the mode 1 and a receiving resource pool in the mode 2.

Optionally, in the foregoing embodiment, the sidelink resource includes a sidelink resource of a first BWP and a sidelink resource of a second BWP.

The sidelink resource of the first BWP includes a sending resource pool and/or a receiving resource pool that are/is in a mode 1.

The sidelink resource of the second BWP includes a sending resource pool and/or a receiving resource pool that are/is in a mode 2.

Optionally, in the foregoing embodiment, the sending resource pool in the mode 1 includes one sending resource pool.

The sending resource pool in the mode 2 includes one or more sending resource pools.

Optionally, in the foregoing embodiment, the receiving resource pool in the mode 1 includes one receiving resource pool.

The receiving resource pool in the mode 2 includes one or more receiving resource pools.

Optionally, in the foregoing embodiment, the BWP is a BWP used when the terminal device is in an IC state.

The resource configuration apparatus provided in the foregoing embodiments may be configured to perform the resource configuration method. An implementation and a principle of the resource configuration apparatus are the same as those of the resource configuration method, and details are not described herein again.

In the embodiments of this application, division of modules is an example, and is merely logical function division. In an actual implementation, there may be another division manner. In addition, function modules in the embodiments of this application may be integrated into one processor, or each of the modules may exist alone physically, or two or more modules may be integrated into one module. The foregoing integrated module may be implemented in a form of hardware, or may be implemented in a form of a software function module.

FIG. 14 is a schematic structural diagram of an embodiment of a communications apparatus according to this application. FIG. 14 shows a communications apparatus 1400 according to an embodiment of this application. The communications apparatus 1400 is configured to implement functions of the terminal device in the foregoing embodiments. The apparatus may be a terminal device, or may be an apparatus in a terminal device. The apparatus may be a chip system. In this embodiment of this application, the chip system may include a chip, or may include a chip and another discrete component. The communications apparatus 1400 includes at least one processor 1420, configured to implement functions of the terminal device in the method provided in this embodiment of this application. For example, the processor 1420 may determine a sidelink resource of a BWP, perform sidelink communication on the BWP based on the sidelink resource, and the like. For details, refer to detailed descriptions in the method example. Details are not described herein again.

The communications apparatus 1400 may further include at least one memory 1430, configured to store a program instruction and/or data. The memory 1430 is coupled to the processor 1420. Coupling in this embodiment of this application is an indirect coupling or a communication connection between apparatuses, units, or modules, may be in an electrical form, a mechanical form, or another form, and is used for information exchange between the apparatuses, the units, or the modules. The processor 1420 may operate in collaboration with the memory 1430. The processor 1420 may execute the program instruction stored in the memory 1430. At least one of the at least one memory may be included in the processor.

The communications apparatus 1400 may further include a communications interface 1410. The communications interface 1410 may be a transceiver 1410, a circuit, a bus, or an interface in another form, and is configured to communicate with another device by using a transmission medium. Therefore, an apparatus used in the apparatus 1400 may communicate with another device. For example, the another device may be a network device. The processor 1420 receives and sends data by using the transceiver 1410, and is configured to implement the method performed by the terminal device in the embodiments corresponding to FIG. 4 to FIG. 10.

This embodiment of this application does not limit a specific connection medium between the communications interface 1410, the processor 1420, and the memory 1430. In this embodiment of this application, the memory 1430, the processor 1420, and the transceiver 1410 are connected to each other by using a bus 1440 in FIG. 14. The bus is represented by using a thick line in FIG. 14, and a connection manner between other components is merely described as an example, and is not limited thereto. The bus may be classified into an address bus, a data bus, a control bus, and the like. For ease of representation, only one thick line is used to represent the bus in FIG. 14, but this does not mean that there is only one bus or only one type of bus.

In this embodiment of this application, the processor may be a general-purpose processor, a digital signal processor, an application-specific integrated circuit, a field programmable gate array, another programmable logic device, a discrete gate, a transistor logic device, or a discrete hardware assembly, and may implement or perform the methods, steps, and logical block diagrams disclosed in the embodiments of this application. The general-purpose processor may be a microprocessor or any conventional processor or the like. The steps of the methods disclosed with reference to the embodiments of this application may be directly presented as being performed and completed by a hardware processor, or performed and completed by a combination of hardware and a software module in a processor.

In this embodiment of this application, the memory may be a non-volatile memory, for example, a hard disk drive (hard disk drive, HDD) or solid-state drive (solid-state drive, SSD); or may be a volatile memory (volatile memory), for example, a random-access memory (random-access memory, RAM). The memory is any other medium that can be used to carry or store expected program code in a form of an instruction or a data structure and that can be accessed by a computer. However, this is not limited thereto. The memory in this embodiment of this application may alternatively be a circuit or any other apparatus that can implement a storage function, and is configured to store the program instruction and/or the data.

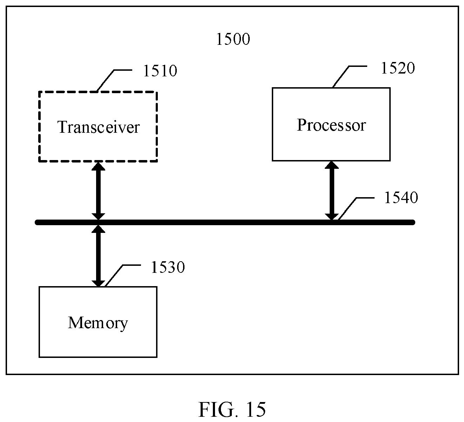

FIG. 15 is a schematic structural diagram of an embodiment of a communications apparatus according to this application. FIG. 15 shows a communications apparatus 1500 according to an embodiment of this application. The communications apparatus 1500 is configured to implement functions of the network device in the foregoing embodiments. The apparatus may be a network device, or may be an apparatus in a network device. The apparatus may be a chip system. The apparatus 1500 includes at least one processor 1520, configured to implement functions of the network device in the method provided in this embodiment of this application. For example, the processor 1520 may send configuration information and the like to the terminal device by using the communications interface 1510. For details, refer to detailed descriptions in the method example. Details are not described herein again.

The communications apparatus 1500 may further include at least one memory 1530, configured to store a program instruction and/or data. The memory 1530 is coupled to the processor 1520. Coupling in this embodiment of this application is an indirect coupling or a communication connection between apparatuses, units, or modules, may be in an electrical form, a mechanical form, or another form, and is used for information exchange between the apparatuses, the units, or the modules. The processor 1520 may operate in collaboration with the memory 1530. The processor 1520 may execute the program instruction stored in the memory 1530. At least one of the at least one memory may be included in the processor.

The communications apparatus 1500 may further include a communications interface 1510. The communications interface 1510 may be a transceiver 1510, a circuit, a bus, or an interface in another form, and is configured to communicate with another device by using a transmission medium. Therefore, an apparatus used in the apparatus 1500 may communicate with another device. For example, the another device may be a terminal device. The processor 1520 receives and sends data by using the transceiver 1510, and is configured to implement the method performed by the network device in the embodiments corresponding to FIG. 4 to FIG. 10.

This embodiment of this application does not limit a specific connection medium between the communications interface 1510, the processor 1520, and the memory 1530. In this embodiment of this application, the memory 1530, the processor 1520, and the transceiver 1510 are connected to each other by using a bus 1540 in FIG. 15. The bus is represented by using a thick line in FIG. 15, and a connection manner between other components is merely described as an example, and is not limited thereto. The bus may be classified into an address bus, a data bus, a control bus, and the like. For ease of representation, only one thick line is used to represent the bus in FIG. 15, but this does not mean that there is only one bus or only one type of bus.

All or some of the methods in the embodiments of this application may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, all or some of the procedures or functions according to the embodiments of the present invention are generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

Obviously, a person skilled in the art can make various modifications and variations to this application without departing from the scope of this application. This application is intended to cover the modifications and variations of this application provided that they fall within the scope of the following claims and equivalent technologies of this application.

## Claims

1. A resource configuration method, comprising:
determining a sidelink resource of a bandwidth part BWP; and
performing sidelink sidelink communication on the BWP based on the sidelink resource.

2. The method according to claim 1, wherein the sidelink resource comprises:
a sending resource pool in a mode 1 and a sending resource pool in a mode 2; and/or
a receiving resource pool in the mode 1 and a receiving resource pool in the mode 2.

3. The method according to claim 1, wherein the sidelink resource comprises:
a sidelink resource of a first BWP and a sidelink resource of a second BWP, wherein
the sidelink resource of the first BWP comprises a sending resource pool and/or a receiving resource pool that are/is in a mode 1; and
the sidelink resource of the second BWP comprises a sending resource pool and/or a receiving resource pool that are/is in a mode 2.

4. The method according to claim 2 or 3, wherein the sending resource pool in the mode 1 comprises one sending resource pool, and the sending resource pool in the mode 2 comprises one or more sending resource pools.

5. The method according to any one of claims 2 to 4, wherein the receiving resource pool in the mode 1 comprises one receiving resource pool, and the receiving resource pool in the mode 2 comprises one or more receiving resource pools.

6. The method according to any one of claims 1 to 5, wherein the determining a sidelink resource of a bandwidth part BWP comprises:
receiving a configuration message, wherein the configuration message is used to indicate the sidelink resource of the bandwidth part BWP.

7. The method according to any one of claims 1 to 6, wherein the BWP is a BWP used when a terminal device is in an in-coverage IC state.

8. The method according to claim 1, wherein
the sidelink resource comprises one or more sending resource pools and one or more receiving resource pools; and
the determining a sidelink resource of a bandwidth part BWP comprises:
determining the sidelink resource of the BWP based on a pre-configuration.

9. The method according to claim 8, wherein the BWP is a BWP used when a terminal device is in an out-of-coverage OOC state.

10. The method according to any one of claims 1 to 9, wherein
when the terminal device switches from the IC state to the OOC state, the performing sidelink communication on the BWP based on the sidelink resource comprises: when the terminal device switches from the BWP used when the terminal device is in the IC state to the BWP used when the terminal device is in the OOC state, performing the sidelink communication on the BWP used when the terminal device is in the OOC state.

11. A resource configuration method, comprising:
sending configuration information, wherein the configuration information is used to indicate a sidelink resource of a bandwidth part BWP, and the sidelink resource is used by a terminal device to perform sidelink communication on the BWP.

12. The method according to claim 11, wherein the sidelink resource comprises:
a sending resource pool in a mode 1 and a sending resource pool in a mode 2; and/or
a receiving resource pool in the mode 1 and a receiving resource pool in the mode 2.

13. The method according to claim 11, wherein the sidelink resource comprises:
a sidelink resource of a first BWP and a sidelink resource of a second BWP, wherein
the sidelink resource of the first BWP comprises a sending resource pool and/or a receiving resource pool that are/is in a mode 1; and
the sidelink resource of the second BWP comprises a sending resource pool and/or a receiving resource pool that are/is in a mode 2.

14. The method according to claim 12 or 13, wherein the sending resource pool in the mode 1 comprises one sending resource pool, and the sending resource pool in the mode 2 comprises one or more sending resource pools.

15. The method according to any one of claims 12 to 14, wherein the receiving resource pool in the mode 1 comprises one receiving resource pool, and the receiving resource pool in the mode 2 comprises one or more receiving resource pools.

16. The method according to any one of claims 11 to 15, wherein the BWP is a BWP used when the terminal device is in an in-coverage IC state.

17. A communications apparatus, configured to implement the method according to any one of claims 1 to 10.

18. A communications apparatus, comprising a processor and a memory, wherein the memory stores instructions; and when the processor invokes and executes the instructions, the apparatus is enabled to perform the method according to any one of claims 1 to 10.

19. A communications apparatus, comprising:
a determining module, configured to determine a sidelink resource of a bandwidth part BWP; and
a communication module, configured to perform sidelink sidelink communication on the BWP based on the sidelink resource.

20. A communications apparatus, comprising a processor and a communications interface, wherein
the processor is configured to determine a sidelink resource of a bandwidth part BWP; and
the processor performs, through the communications interface, sidelink communication on the BWP based on the sidelink resource.

21. A communications apparatus, configured to implement the method according to any one of claims 11 to 16.

22. A communications apparatus, comprising a processor and a memory, wherein the memory stores instructions; and when the processor invokes and executes the instructions, the apparatus is enabled to perform the method according to any one of claims 11 to 16.

23. A communications apparatus, comprising:
a sending module, configured to send configuration information, wherein the configuration information is used to indicate a sidelink resource of a bandwidth part BWP, and the sidelink resource is used by a terminal device to perform sidelink communication on the BWP.

24. A communications apparatus, comprising a processor and a communications interface, wherein
the processor sends configuration information through the communications interface, wherein the configuration information is used to indicate a sidelink resource of a bandwidth part BWP, and the sidelink resource is used by a terminal device to perform sidelink communication on the BWP.

25. A communications system, comprising the communications apparatus according to any one of claims 17 to 20 and the communications apparatus according to any one of claims 21 to 24.

26. A computer-readable storage medium, comprising instructions, wherein when the instructions are run on a computer, the computer is enabled to perform the method according to any one of claims 1 to 16.

27. A computer program product, comprising instructions, wherein when the instructions are run on a computer, the computer is enabled to perform the method according to any one of claims 1 to 16.
